# EUROPEAN PATENT APPLICATION

(11) **EP 4 432 503 A1**
(43) Date of publication of application: **18.09.2024**
(21) Application number: 23162360.4
(22) Date of filing: 16.03.2023
(51) Int. Cl.: H02J 1/14, H02J 4/00

(54) **CONTROLLING USAGE OF SOLAR PANEL ENERGY**

(71) Applicant: Haltian Oy, 90230 Oulu (FI)
(72) Inventor: Sarasmo, Marko, 90230 Oulu (FI)
(74) Representative: Kolster Oy Ab

(57) **Abstract**

A system and a method for controlling usage of solar panel energy. The solution comprises decreasing (300) gradually from a given maximum value the resistance of a variable load circuitry connected in parallel with the solar panel arrangement, measuring (302)the voltage or current output of the solar panel arrangement during the decreasing of the resistance, determining (304), based on the measurements, the maximum output power provided by the solar panel arrangement and providing (306) control of the operation of devices acting as the load of the solar panel arrangement based on the determination.

## Description

### FIELD

Various embodiments relate to solar panel energy production and monitoring and controlling the usage of energy produced by solar panels.

### BACKGROUND

Renewable energy sources have been under increased study in recent years. Technology related to the generation of renewable energy, such as wind power, wave power, and solar power has developed rapidly. It has been envisaged that the renewable energy can significantly help in fulfilling the constantly increasing demand of electric power.

The use of solar panels to harvest energy from solar radiation has increased in recent years. Solar panels have been employed in both large scale and small-scale systems. The energy output capability of solar panels is largely depending on external conditions. In outside systems weather and time of day and external lighting in indoor systems are typical reasons for the variation in the energy output of solar panels.

In many cases there is a load connected to the solar panels. If the maximum energy output of the panels is unknown at times, there may be problems if the load, unaware of the available maximum power, requires from the panels more power than the panels can provide.

### BRIEF DESCRIPTION

According to an aspect, there is provided subject matter of independent claims. Dependent claims define some embodiments.

One or more examples of implementations are set forth in more detail in the accompanying drawings and the description of embodiments.

### LIST OF DRAWINGS

Some embodiments will now be described with reference to the accompanying drawings, in which
Figure 1 illustrates an embodiment of a solar panel energy system;
Figure 2 illustrates an example of a processing unit;
Figure 3 is a flowchart illustrating an embodiment; and
Figure 4 illustrates measuring the maximum output power.

### DESCRIPTION OF EMBODIMENTS

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

Reference numbers, both in the description of the embodiments and in the claims, serve to illustrate the embodiments with reference to the drawings, without limiting it to these examples only.

The embodiments and features, if any, disclosed in the following description that do not fall under the scope of the independent claims are to be interpreted as examples useful for understanding various embodiments of the invention.

As mentioned, when solar panel arrangements are used as energy sources, the power output of the panel arrangements may vary considerably mainly due to weather or other reasons. Thus, the actual maximum power output is not known. At one moment the output power may be large but, for example due to clouds blocking the sun in outside environment or light switched off in indoor environment, in the next moment the output power may drop. This variation may have an effect on the services which utilise the power provided by the solar panel arrangement in their operation.

For example, consider a situation where a system is mainly using let say 25% of nominal power and the solar panel arrangement powering the system is specified to cover all use cases. However, if for some unknown reason power output of the solar panel arrangement reduces, it is important to know the maximum power output of the solar panel arrangement so that the system can react to the power loss in a controlled manner. If the system were aware of the available maximum power, it could then operate in different way to limit the power usage to avoid system shutdown or any other problems.

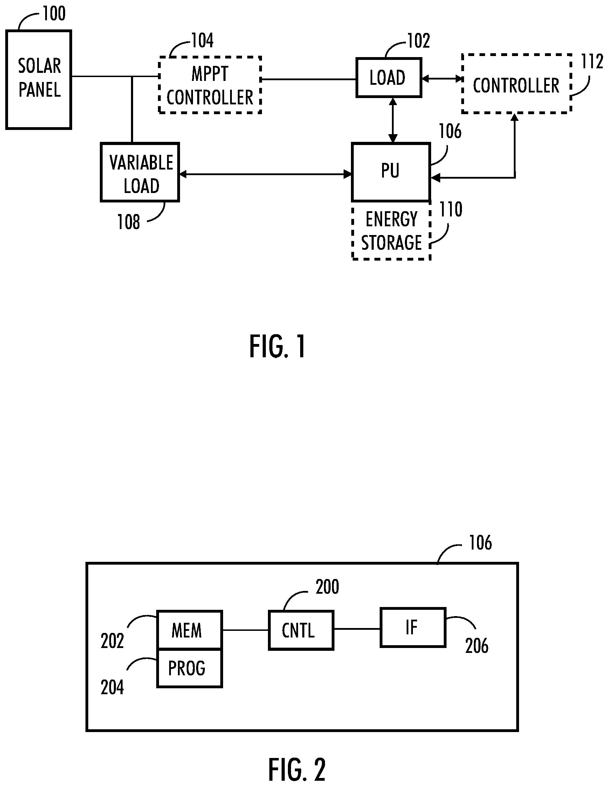

Fig. 1 illustrates an embodiment of a system for controlling usage of solar panel energy. It should be understood that the system is depicted herein as an example illustrating some embodiments. It is apparent to a person skilled in the art that the system may also comprise other functions and/or structures and not all described functions and structures are required. Different modules of the system may be implemented in one or more physical or logical entities.

In an embodiment, the system may comprise a maximum power point tracking (MPPT) controller 104 connected between a solar panel arrangement (100) and devices acting as a load 102 of the solar panel arrangement. In an embodiment, there may be a DC/DC converter or the like connected between a solar panel arrangement (100) and the devices acting as a load 102

The system comprises a processing unit 106 controlling the operation of the system.

The system further comprises a variable load circuitry 108 connected in parallel with the solar panel arrangement 100. The processing unit 106 is operationally connected to variable load circuitry and the devices acting as the load 102 of the solar panel arrangement.

The MPPT controller may be used to optimize power harvesting from the solar panel arrangement as is known in the art. It is a self-controlled device without need for external adjustments. The MPPT controller monitors the power provided by the solar panel arrangement in its operation, but it does not provide any indication of the available power.

The variable load may be realized in many various ways as one skilled in the art is aware. The load may be realized with various combinations of resistors and semiconductor technology. In an embodiment, the variable load circuitry 108 is realised with a set of different loading elements, such as resistors, driven by certain order, and controlled by the processing unit. The control of resistors may be performed by relays or semiconductor switches or both, for example. In an embodiment, the variable load circuitry 108 is realised with a single loading element. For example, a field effect transistor, FET, or a transistor which electrical conductivity is adjusted by the processing unit control.

In an embodiment, the system may also comprise an energy storage 110. The energy storage may be configured to store energy provided by the solar panel arrangement. The energy storage may be a separate unit or in connection with the processing unit.

In an embodiment, the system may also comprise an external controller 112. The controller 112 may be operationally connected to the processing unit and to the devices acting as the load 102 of the solar panel arrangement. The controller may be a server, or a computing device connected to the rest of the system via Internet, for example.

The processing unit may communicate with the external controller via a radio connection. Further, the processing unit may also communicate with the devices acting as the load 102 of the solar panel arrangement via a radio connection.

Fig. 2 illustrates an example of a processing unit. It should be understood that the processing unit is depicted herein as an example illustrating some embodiments. It is apparent to a person skilled in the art that the processing unit may also comprise other functions and/or structures and not all described functions and structures are required. Although the processing unit has been depicted as one entity, different modules and memory may be implemented in one or more physical or logical entities.

The processing unit 106 comprises a control circuitry 200 configured to control at least part of the operation of the processing unit. The control circuitry may be realised with a processor, for example.

The processing unit may comprise one or more memories 202 for storing data. Furthermore, the memory may store software 204 executable by the control circuitry 200. The memory may be integrated in the control circuitry.

The processing unit further comprises one or more interfaces 206 for communicating with the system and the devices acting as the load 102 of the solar panel arrangement and other apparatuses, such as the external controller. The interfaces may realise a wired or a wireless communication. The interfaces may comprise a user interface. The user interface may comprise one or more of the following: a display, a speaker, a set of light emitting diodes, for example.

A non-exhaustive list of implementation techniques for the control circuitry 200 and the memory 202, includes, but is not limited to: logic components, standard integrated circuits, application-specific integrated circuits (ASIC), system-on-a-chip (SoC), application-specific standard products (ASSP), microprocessors, microcontrollers, digital signal processors, special-purpose computer chips, field-programmable gate arrays (FPGA), and other suitable electronics structures.

The term 'memory' 202 refers to a device that is capable of storing data run-time (= working memory) or permanently (= non-volatile memory). The working memory and the non-volatile memory may be implemented by a random-access memory (RAM), dynamic RAM (DRAM), static RAM (SRAM), a flash memory, a solid state disk (SSD), PROM (programmable read-only memory), a suitable semiconductor, or any other means of implementing an electrical computer memory.

The software (or computer program code) 204 may be written by a suitable programming language (such as C, C++, assembler or machine language, for example), and the resulting executable code may be stored in the memory 202 and run by the control circuitry 200. The software 204 may be in source code form, object code form, executable form, or in some intermediate form, but for use in the control circuitry 200 it is in the executable form. There are many ways to structure the computer program code 204: the operations may be divided into modules, subroutines, methods, classes, objects, applets, macros, etc., depending on the software design methodology and the programming language used. In modern programming environments, there are software libraries, i.e. compilations of ready-made functions, which may be utilized by the software 204 for performing a wide variety of standard operations. In addition, an operating system (such as a general-purpose operating system or a real-time operating system) may provide the software 204 with system services.

For radio communications, the interfaces 206 of the processing unit may comprise at least one radio transceiver and an antenna operationally connected to the at least one radio transceiver. The radio transceiver may operate according to any of the various standard/proprietary technologies utilizing various frequency bands and communication protocols. Standards include, but are not limited to, 802.11 WLAN and various Bluetooth^{®} standards including Bluetooth^{®} low energy, BLE.

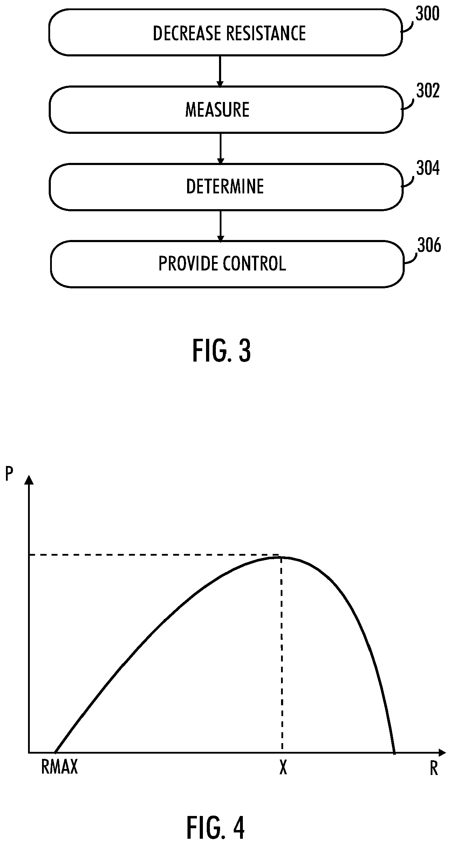

Fig. 3 is a flowchart illustrating an embodiment for controlling usage of energy provided by a solar panel arrangement.

In step 300, the processing unit is configured to decrease gradually from a given maximum value the resistance of a variable load circuitry connected in parallel with the solar panel arrangement.

In step 302, the processing unit is configured to measure the voltage or current output of the solar panel arrangement during the decreasing of the resistance.

In step 304, the processing unit is configured to determine, based on the measurements, the maximum output power provided by the solar panel arrangement.

In step 306, the processing unit is configured to provide controlling of the operation of devices acting as the load of the solar panel arrangement based on the determination.

In an embodiment, the processing unit is configured to set the resistance of a variable load circuitry to a given maximum value. Then the processing unit is configured to decrease the resistance of a variable load circuitry gradually from a given maximum value downwards. In an embodiment, the resistance may be adjusted stepwise. In an embodiment, the control may be continuous. The control of the resistance may depend on the realisation of the variable load circuitry. For example, if the circuitry is realised with a set of separate resistors, the resistance may be decreased with small steps, while in the case of a semiconductor-based circuitry the control may be continuous.

While the resistance of the variable load in gradually decreasing, the processing unit is configured to measure the voltage or current output of the solar panel arrangement during the decreasing of the resistance.

As the resistance of the variable load is known and the voltage or current is measured, available power can be calculated. As the resistance is decreased from a given maximum value, the power increases. However, in certain point of the decreasing load, the output power of the solar panel arrangement starts to decrease.

Depending on the realization of the variable load, either voltage or current may be measured to determine the maximum output power provided by the solar panel arrangement.

Fig. 4 illustrates the variation of the output power. On the x-axis is resistance R and on the y-axis the power P. When resistance in decreased starting from the maximum value RMAX, the power increases. When the resistance reaches the pointy marked as X, the power reaches to the maximum power value the solar panel arrangement is able to produce. If the resistance is still decreased beyond the point X, the power starts to decrease. In an embodiment, when the processing unit detects that the power starts to decrease, it may stop the measurement process. The processing unit may determine that the maximum output power has been reached.

In an embodiment, the processing unit is configured to perform measurements of the maximum output power provided by the solar panel arrangement at given time intervals. Thus, when the weather conditions change, the changed maximum available output power can be detected and needed actions taken.

In an embodiment, the processing unit is configured to monitor the voltage output of the solar panel arrangement. The processing unit may be configured to initialise measurements of the maximum output power after detecting a predetermined change in the voltage. For example, if the voltage drops a given amount, the measurements may be initialised.

The processing unit is configured to initiate controlling of the operation of devices acting as the load of the solar panel arrangement based on the determined maximum power value the solar panel arrangement is able to produce.

In an embodiment, the system may comprise the energy storage 110 and the processing unit may determine the amount of energy stored in the energy storage into account when controlling the devices acting as the load of the solar panel arrangement.

In an embodiment, the processing unit may communicate with the external controller 112 which may act as a supervising system. The processing unit may transmit information on the maximum output power provided by the solar panel arrangement. The external controller may also perform the control of the devices acting as the load instead or in addition to the processing unit.

The devices acting as the load of the solar panel arrangement may be any kind of devices that operate or utilise electric power. For example, the devices may be small wearable devices, indoor or outdoor sensors, location tracking infrastructure devices, such as anchors, routers, and beacons, motors or engines, lights, battery chargers or computing devices, for example. In an embodiment, the processing unit may act as the load of the solar panel arrangement.

In an embodiment, the devices may also have their own energy harvesting unit. Thus, they may utilise energy they have harvested themselves and energy provided by the solar panel arrangement

Further, the solar panel arrangement may be of any size, from a small size of smartwatch display to bigger outdoor systems. It may be also bendable for example in wearable band.

In an embodiment, the processing unit can control the devices acting as the load of the solar panel arrangement in various ways.

The processing unit may, based on the determination of the maximum available output power the solar panel arrangement is able to provide, control operation mode of the devices. Further, the processing unit may control the energy usage of devices.

In an embodiment, the devices may have different operation modes in which the energy consumption of the device is different. For example, the devices may have a full operating mode where the energy consumption is largest and reduced functionality modes with reduced energy consumption and a sleep mode with the smallest energy consumption. In an embodiment, the processing unit may store information of the different modes of the devices and select the suitable mode based on the available output power. As mentioned, the amount of energy stored in an energy storage may be taken into account.

The devices may be equipped with a radio transceiver. Depending on the available power, the processing unit may change the radio communication mode of the devices from low latency, high data rate communication to simple low power beaconing mode to save power, for example.

In an embodiment, the processing unit may be configured to store information on the maximum output power provided by the solar panel arrangement at given time intervals and control the operation of the devices acting as the load based on the stored information. For example, the processing unit may, after being installed and used for a length of time, determine that at given times of day the available energy is always reduced. This information may be taken into account in the control of the devices. In addition, the information may be utilised in planning maintenance operations of the solar panel arrangement. For example, if it is noticed that the maximum power provided by the solar panel arrangement has been constantly decreasing, cleaning of the panels may be required.

In an embodiment, the processing unit may store operating mode rules which prefer certain modes. Based on the maximum output power the solar panel arrangement is capable of providing and energy stored in the energy storage the processing unit may indicate that the devices acting as the load can perform tasks required from them. A task in practice my mean a certain operating mode can be utilised for a required time, for example.

In an embodiment, the processing unit may communicate with the external controller 112 which may act as a supervising system. The processing unit can also indicate that to the supervising system that tasks can or cannot be done.

In an embodiment, the external controller 112 or supervising system may know each device status, and it can control both the processing unit and the devices acting as the load. The external controller 112 or supervising system may control more than one system each equipped with a separate processing unit.

The external controller 112 or supervising system may transmit a command to use a given power mode to execute tasks. Supervising system can also generate tasks to devices that some of them are more active and rest of them are sleeping, harvesting mainly energy to storage. After harvesting the supervising can swap tasks to these devices.

In an embodiment, the supervising system or the processing unit stores data about what the devices acting as the load can perform with given available energy levels. If the available energy is reduced, then devices may be controlled to maintain minimum required performance level. In case of the available energy level is high, then the device may be controlled to operate in maximum performance level.

In an embodiment, the supervising system or the processing unit stores data about time instants when high and low performance level is required and can perform system optimization so that requirements are met. For example, energy may be stored to the energy storage 110 to be used when high performance level is required.

In an embodiment, measured power level can be also used to optimize device positioning during deployment. For example, if a system with a solar panel arrangement, processing unit and a device acting as a load is attached to lamp or to the wall, the system can inform real time to installing personnel what is harvested power level in numbers or simply if is it above required level which is needed for operation. Indication can be shown visually or audible by system itself, direct radio message like beaconing or by the supervising system.

In an embodiment, the supervising system or the processing unit may provide an indication of situations where the maximum energy the solar panel arrangement can provide is less than normal. The supervising system or the processing unit may store normal allowed values for the maximum energy, and if it is determined that the measured values are below normal or stay very low for a given length of time, an alarm may be indicated. It may be that the solar panels need cleaning, for example.

The presented system provides many advantages. For example, with the knowledge of the maximum energy the solar panel arrangement can provide, the operation of the devices acting as the load may be adjusted in a controlled manner. The operation of the devices can be maintained, for example in a reduced energy consumption mode of, if need be, in a sleep mode. No abrupt shutting down of devices is required. Further, the operation of the solar panels may be monitored.

Even though the invention has been described with reference to one or more embodiments according to the accompanying drawings, it is clear that the invention is not restricted thereto but can be modified in several ways within the scope of the appended claims. All words and expressions should be interpreted broadly, and they are intended to illustrate, not to restrict, the embodiments. It will be obvious to a person skilled in the art that, as technology advances, the inventive concept can be implemented in various ways.

## Claims

1. A system for controlling usage of solar panel energy, the system comprising a solar panel arrangement (100) operationally connected to devices acting as a load (102) of the solar panel arrangement, a processing unit (106), a variable load circuitry (108) connected in parallel with the solar panel, the processing unit being operationally connected to the variable load circuitry and the devices acting as the load (102) of the solar panel arrangement and configured to
decrease gradually the resistance of the variable load from a given maximum value;
measure the voltage or current output of the solar panel arrangement during the decreasing of the resistance;
determine based on the measurements the maximum output power provided by the solar panel arrangement;
providing control of the operation of the devices acting as the load based on the determination.

2. The system of claim 1, the processing unit (106) being configured to control the operation mode of the devices acting as the load (102) of the solar panel arrangement based on the measurements.

3. The system of claim 1, the processing unit (106) being configured to control the energy usage of devices acting as the load (102) of the solar panel arrangement based on the measurements.

4. The system of any preceding claim, the processing unit (106) being configured to perform measurements of the maximum output power provided by the solar panel arrangement at given time intervals.

5. The system of any preceding claim 1 to 3, the processing unit (106) being configured to monitor the voltage output of the solar panel arrangement and initialise measurements of the maximum output power after detecting a predetermined change in the voltage.

6. The system of any preceding claim, the processing unit (106) being configured to store information on the maximum output power provided by the solar panel arrangement measured at given time intervals and control the operation of the devices acting as the load (102) of the solar panel arrangement based on the stored information.

7. The system of claim 1, the processing unit (106) being operationally connected to an external control system (112) and configured to transmit information on the maximum output power provided by the solar panel arrangement to the external control system.

8. The system of any preceding claim, further comprising an energy storage (110) configured to store energy provided by the solar panel arrangement;
the processing unit being configured to determine the amount of energy stored in the energy storage into account when controlling the devices acting as the load (102) of the solar panel arrangement.

9. The system of any preceding claim, wherein the devices acting as the load of the solar panel arrangement comprise one or more of the following:
wearable devices, indoor or outdoor sensors, location tracking infrastructure devices motors or engines, lights, battery chargers or computing devices.

10. A method for controlling usage of energy provided by a solar panel arrangement by a processing unit, the method comprising:
decreasing (300) gradually from a given maximum value the resistance of a variable load circuitry connected in parallel with the solar panel arrangement;
measuring (302) the voltage or current output of the solar panel arrangement during the decreasing of the resistance;
determining (304), based on the measurements, the maximum output power provided by the solar panel arrangement;
providing (306) control of the operation of devices acting as the load of the solar panel arrangement based on the determination.

11. The method of claim 10, further comprising
controlling the operation mode of the devices acting as the load of the solar panel arrangement based on the measurements.

12. The method of claim 10, further comprising
controlling the energy usage of devices acting as the load of the solar panel arrangement based on the measurements.

13. The method of any preceding claim 10 -12, further comprising
performing measurements of the maximum output power provided by the solar panel arrangement at given time intervals.

14. The method of any preceding claim 10 -12, further comprising
monitoring the voltage output of the solar panel arrangement and initialising measurements of the maximum output power after detecting a predetermined change in the voltage.

15. The method of any preceding claim 10 -14, further comprising
storing information on the maximum output power provided by the solar panel arrangement measured at given time intervals and
controlling the operation of the devices acting as the load of the solar panel arrangement based on the stored information.

16. The method of any preceding claim 10 -15, further comprising
transmitting information on the maximum output power provided by the solar panel arrangement to the external control system.

17. The method of any preceding claim 10 -16, further comprising
determining the amount of energy stored in an energy storage configured to store energy provided by the solar panel arrangement, and
taking the stored energy into account when controlling the devices acting as the load of the solar panel arrangement.

18. A computer program product comprising program instructions which, when loaded into a processing unit, execute the method according to any of the claims 10 to 17.
